# EUROPÄISCHE PATENTSCHRIFT

(11) **EP 0 970 022 B1**
(45) Veröffentlichungstag und Bekanntmachung des Hinweises auf die Patenterteilung: **18.04.2001**
(21) Anmeldenummer: 97951077.3
(22) Anmeldetag: 06.11.1997
(51) Int. Cl.: C03B 9/36, C03B 9/38, C03B 27/06

(54) **VERFAHREN ZUR VISKOSITÄTSERHÖHUNG VON HOHLGLASKÖRPER-SCHMELZEN ZUM ZWECK DER EFFEKTIVEREN ABKÜHLUNG**
HOW TO INCREASE THE FUSION VISCOSITY INDEX OF HOLLOW GLASSWARE FOR OF A MORE EFFICIENT COOLING
PROCEDE D'ACCROISSEMENT DE L'INDICE DE VISCOSITE DE LA FUSION DE CORPS EN VERRE CREUX AUX FINS D'UN REFROIDISSEMENT PLUS EFFICACE

(30) Priorität: 07.02.1997 DE 19706014
(43) Veröffentlichungstag der Anmeldung: 12.01.2000
(73) Patentinhaber: Steam & Glass Technology GmbH, 09603 Grossschirma (DE)
(72) Erfinder: Hessenkemper, Heiko, Prof. Dr., 09603 Grossschirma (DE)
(74) Vertreter: Eisenführ, Speiser & Partner
(86) Internationale Anmeldenummer: DE9702664
(87) Internationale Veröffentlichungsnummer: WO9834882

(56) Entgegenhaltungen:
- EP-A- 0 163 618
- EP-A- 0 825 155
- WO-A-88/10240
- WO-A-91/03430
- BE-A- 437 739
- BE-A- 539 969

## Beschreibung

### Technisches Gebiet der Erfindung

Die Erfindung findet in der Glasindustrie Verwendung und betrifft ein Verfahren zur Herstellung von Hohlglaskärpern. Als Hohlglaskörper werden hierbei beispielsweise Behältergläser jeglicher Art, Glasröhren unterschiedlichster Formen aber auch Fernsehkolben und ähnliche Erzeugnisse verstanden.

### Stand der Technik

Die Produktionsgeschwindigkeit im Formgebungsbereich der Hohlglasindustrie ist im entscheidenden Maße davon abhängig, in welcher Geschwindigkeit die Wärme der Schmelze entzogen werden kann. Dieser Wärmeentzug ist für eine Viskositätserhöhung notwendig, die das Fließen der Schmelze reduziert, so daß eine Formstabilität des Glasartikels erreicht wird.

In der Behälterglas- Industrie wird dieser Energieentzug über gekühlte metallische Formen und durch die Kühlwirkung der Ausblasluft erreicht. Im Röhrenglasbereich erfolgt die Abkühlung im wesentlichen an der Luft während des Ziehprozesses.

Messungen und Energiebilanz- Betrachtungen in der Behälterglas- Industrie haben gezeigt, daß etwa 90 % der Energie durch die Formen und nur 10 % über die Ausblasluft durch die Kühlwirkung im direkten Kontakt mit der Schmelze abgeführt werden.

Nachteil dieser bekannten Technologien ist die uneffektive Abkühlwirkung der Luft.

In WO,A,88 10 240 und WO,A,91 03 430 wird ein Verfahren zur Abkühlung von Glasschmelzen unter Verwendung von kryogenem bzw. kondensierten Kohlendioxid beschrieben. Dabei wird die Aggregatsumwandlungsenergie und eine möglichst hohe Temperaturdifferenz zwischen der Temperatur des Kühlmittels und der Schmelze zur effektiven Abkühlung ausgenutzt.
Die Verwendung von flüssigen Kühlmedien hat den Nachteil, daß Spannungsgradienten induziert werden. Dies führt zu Mikrorissen und zu einer deutlichen Verringerung der Festigkeitswerte.

Das in BE,A, 539 969 beschriebene Verfahren zur thermischen Härtung von nochmals auf 690°C erhitzten Glaskörpern ist nicht vergleichbar mit der Abkühlung von Glasschmelzen.

### Darstellung der Erfindung

Der Erfindung liegt das Problem zugrunde, die Abkühlung von Hohlglaskörper- Schmelzen durch eine Viskositätserhöhung effektiver zu gestalten und damit den Fertigungszyklus zu verkürzen.

Erfindungsgemäß wird der Innenbereich des Hohlglaskörpers zwecks Abkühlung von einem gasförmigen Medium mit hoher Strahlungsabsorption im Bereich von 2000 bis 5000 nm durchströmt.
Als gasförmige Medien können beispielsweise verwendet werden: Propan, Methan, Kohlenmonoxid, Kohlendioxid, Wasserdampf.
Das gasförmige Medium kann sowohl in einem geschlossenen oder offenen Kreislauf geführt werden. Besonders effektiv ist jedoch ein geschlossener Kreislauf.
Weitgehend unverändert bleiben unter Anwendung der Erfindung die sonstigen Prozeßbedingungen.
Der Fertigungszyklus verkürzt sich um etwa 25 %, so daß erhebliche Produktivitätssteigerungen eintreten.

### Beste Wege zur Ausführung der Erfindung

Die Formgebung einer üblichen Glasschmelze findet etwa in einem Temperaturbereich zwischen 1200° C und 600° C statt. Im Temperaturbereich ab 600° C bis 700° C wird bei Schmelzen aber die Strahlungsleitfähigkeit mehr und mehr dominant.
Bei der Abkühlung einer Hohlglaskörper- Schmelze wird Strahlung von einer Wand emittiert und von der anderen Wand absorbiert bei exponentiell abnehmender Intensität mit der Dicke nach dem Lambert- Beer- Gesetz. Diese Innenwände erwärmen sich durch die Strahlungszufuhr und emittieren wieder selbst, so daß der Strahlungstransfer ohne einen signifikanten Kühlungseffekt hin und her geht, solange zwischen den beiden Wänden kein absorbierendes Medium existiert. Luft absorbiert in diesem Bereich praktisch nicht, wobei hervorzuheben ist, daß die Innenwände durch diesen Strahlungsaustausch eine relativ hohe Temperatur besitzen im Gegensatz zu den Außenwänden, die durch den Kontakt zu den Metallformen kalt werden.

Möchte man den dominierenden Strahlungswärmetransport für Kühlzwecke besser nutzen, so kann durch Anwendung des erfindungsgemäßen Verfahrens dies erreichet werden. Wird der Innenbereich durch ein in diesem temperaturabhängigen Wellenlängenbereich absorbierendes Medium gefüllt, so wird die Strahlung dort absorbiert, womit ein zusätzlicher Kühleffekt erreicht wird und eine Produktionssteigerung möglich ist.
Als derartiges Medium eignen sich beispielsweise Propan, Methan, Kohlenmonoxid, Kohlendioxid und Wasserdampf. Diese zeigen zwischen 2000 und 5000 nm ein Maximum ihres Absorptionsvermögens.
Um zu verhindern, daß diese Medien bei erhöhten Temperaturen zum Eigenstrahler werden, die diesen Effekt wieder aufheben, ist ein permanenter Austausch in einem offenen oder geschlossenen Kreislauf vorzusehen.
Vorzugsweise ist aus verfahrenstechnischen Gründen an gasförmige Medien zu denken, wobei hier aus Kostengründen Wasserdampf ideal ist, der bei 2800 nm eine starke Absorption zeigt.

Mit dem erfindungsgemäßen Verfahren wird die Strahlung schon im Gasraum absorbiert, und es findet eine erheblich verkleinerte Strahlungsabsorption der Innenwände und damit Erwärmung der gegenüberliegenden Seite statt und damit auch keine Reemission. Im Endeffekt wird damit neben dem kalten Bereich der Außenwand auch ein deutlich kühlerer Bereich der Innenwand erzeugt. Der verstärkte Kühleffekt ergibt eine Art Sandwicheffekt, der es gestattet, den Glaskörper früher als formstabil zu betrachten, da der heiße Innenbereich zwischen Innen- und Außenwand durch zwei erkaltete Randbereiche gehalten wird.
Damit wird bei einer integral höheren Temperatur des Hohiglaskörpers die gleiche Formstabilität erreicht.
Es wird eine Zykluszeiterniedrigung bei Anwendung von Wasserdampf um bis zu 25 % erreicht. Bei 200° C heißem Wasserdampf bei 2 bar wird auf einer Strecke von 5 cm etwa 75 % der Strahlung absorbiert.
Der Entzug der Wärmemenge benötigt eine erhebliche Menge an gasförmige Medien, abhängig von der Wärmekapazität des Mediums. Beispielsweise werden mehrere 100 kg Wasserdampf pro Stunde benötigt. Deshalb ist von besonderer Bedeutung für die Erfindung, daß das gasförmige Medium vorzugsweise in einem geschlossenen Kreislauf geführt wird. Als Nebeneffekt ergibt sich eine Energie- Rückgewinnung bzw. Einsparung. Hierzu sind Verdichter, Dampfmotor und Rückkühlwerk sowie entsprechende Regel- und Steuereinrichtungen erforderlich.

### Gewerbliche Anwendbarkeit

Das erfindungsgemäße Verfahren findet bei der Herstellung von Hohlglaskörpern (Behälterglas, Glasröhren, Fernsehkolben) gewerbliche Anwendung.

## Patentansprüche

1. Verfahren zur Viskositätserhöhung von Hohlglaskörper-Schmelzen zum Zweck der effektiveren Abkühlung, dadurch gekennzeichnet, daß der Innenbereich des Hohlglaskörpers von einem gasförmigen Medium mit hoher Strahlungsabsorption im Bereich von 2000 bis 5000 nm durchströmt wird.

2. Verfahren nach Anspruch 1, dadurch gekennzeichnet, daß als gasförmiges Medium Propan, Methan, Kohlenmonoxid oder Kohlendioxid verwendet wird.

3. Verfahren nach Anspruch 1, dadurch gekennzeichnet, daß als gasförmiges Medium Wasserdampf mit einer Temperatur von ca. 200°C und einem Druck von ca. 2 bar verwendet wird.

4. Verfahren nach Anspruch 1, dadurch gekennzeichnet, daß das gasförmige Medium in einem offenen oder geschlossenen Kreislauf geführt wird.

## Revendications

1. Procédé pour l'élévation de la viscosité de masses en fusion de récipients en verre à des fins d'un refroidissement plus efficace, caractérisé en ce que le domaine interne du récipient en verre est parcouru par un milieu gazeux ayant une absorption de rayonnement plus élevée dans le domaine de 2 000 à 5 000 nm.

2. Procédé selon la revendication 1, caractérisé en ce que l'on utilise comme milieu gazeux du propane, du méthane, du monoxyde de carbone ou du dioxyde de carbone.

3. Procédé selon la revendication 1, caractérisé en ce que l'on utilise comme milieu de gazeux de la vapeur d'eau ayant une température comprise entre environ 200°C et une pression d'environ 2 bars.

4. Procédé selon la revendication 1, caractérisé en ce que l'on introduit le milieu gazeux dans une circulation ouverte ou fermée.

## Claims

1. A method of increasing the viscosity of hollow glass body melts for the purposes of more effective cooling, characterised in that a gaseous medium with a high level of radiation absorption in the range of 2000 to 5000 nm is caused to flow through the internal region of the hollow glass body.

2. A method according to claim 2 characterised in that propane, methane, carbon monoxide or carbon dioxide is used as the gaseous medium.

3. A method according to claim 1 characterised in that steam at a temperature of about 200°C and a pressure of about 2 bars is used as the gaseous medium.

4. A method according to claim 1 characterised in that the gaseous medium is passed in an open or closed circuit.
